# EUROPEAN PATENT APPLICATION

(11) **EP 4 810 355 A1**
(43) Date of publication of application: **23.09.2026**
(21) Application number: 26164675.6
(22) Date of filing: 13.03.2026
(51) Int. Cl.: B62D 25/08, B62D 29/00

(54) **VEHICLE FRAME STRUCTURE**

(30) Priority: 21.03.2025 JP 2025047339
(71) Applicant: Toyota Jidosha Kabushiki Kaisha, Toyota-shi, Aichi-ken 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle frame structure has: a front frame portion (12) formed integrally by casting so as to include a pair of left and right front side member portions (14), a pair of left and right apron upper member portions (16), and a pair of left and right suspension tower portions (18) disposed between the front side member portions (14) and the apron upper member portions (16); a front frame (32) fixed to an upper portion of the front frame portion (12), and connecting the front side member portions (14) together in a vehicle transverse direction; a pair of left and right side frames (34) respectively extending toward a vehicle rear side from vehicle transverse direction both end portions of the front frame (32) and connected to the apron upper member portions (16); and a pair of left and right inclined frames (36) extending at inclines toward a vehicle rear side and vehicle transverse direction inner sides from connection portions (P2) at which the front frame (32) and the side frames (34) are connected at further toward vehicle transverse direction outer sides than the front side member portions (14).

## Description

### BACKGROUND

### Technical Field

The present disclosure relates to a vehicle frame structure.

### Related Art

Japanese Patent Application Laid-Open (JP-A) No. 2005-335619 discloses a structure in which rigid members span between side members (front side members) and the front ends of apron upper members.

In the structure of JP-A No. 2005-335619, at the time of a front collision, load can be transmitted effectively from the front side members to the apron upper members via the rigid members. By the way, there are cases in which portions of the frame are formed integrally by casting for purposes such as reducing the number of parts. However, in a structure in which a frame is formed integrally by casting, if deformation arises at the time of a collision, partial repairs are difficult. Therefore, there is room for improvement in terms of repairability.

### SUMMARY

The present disclosure provides a vehicle frame structure having improved repairability.

A vehicle frame structure of a first aspect includes: a front frame portion formed integrally by casting so as to include a pair of left and right front side member portions extending in a vehicle longitudinal direction at a vehicle front portion, a pair of left and right apron upper member portions disposed at a vehicle upper side and vehicle transverse direction outer sides of the front side member portions, and a pair of left and right suspension tower portions disposed between the front side member portions and the apron upper member portions; a front frame fixed to an upper portion of the front frame portion, and connecting the pair of front side member portions together in a vehicle transverse direction at further toward a vehicle front side than the suspension tower portions; a pair of left and right side frames respectively extending toward a vehicle rear side from vehicle transverse direction both end portions of the front frame and connected to the apron upper member portions; and a pair of left and right inclined frames extending at inclines toward a vehicle rear side and vehicle transverse direction inner sides from connection portions at which the front frame and the side frames are connected at further toward vehicle transverse direction outer sides than the front side member portions.

In the vehicle frame structure of the first aspect, the front frame portion is formed integrally by casting so as to include the front side member portions, the apron upper member portions and the suspension tower portions. The front side member portions are provided as a left-right pair, and extend in the vehicle longitudinal direction at the vehicle front portion. The apron upper member portions are provided as a left-right pair, and are disposed further toward the vehicle upper side and the vehicle transverse direction outer sides than the front side member portions. The suspension tower portions are provided as a left-right pair, and are disposed between the front side member portions and the apron upper member portions, respectively. Due to the front frame portion being formed integrally by casting in this way, the number of parts can be reduced. On the other hand, if deformation arises at the front frame portion at the time of a collision, partial repairs are difficult. Therefore, there is room for improvement in terms of repairability.

Here, the front frame is fixed to the upper portion of the front frame portion, and this front frame connects the pair of front side member portions together in the vehicle transverse direction at further toward the vehicle front side than the suspension tower portions.
Further, the pair of left and right side frames respectively extend toward the vehicle rear side from the vehicle transverse direction both end portions of the front frame, and are connected to the apron upper member portions respectively. Moreover, the pair of left and right inclined frames extend toward the vehicle rear side and vehicle transverse direction inner sides from the connection portions at which the front frame and the side frames are connected at further toward the vehicle transverse direction outer sides than the front side member portions. Due thereto, when collision load is inputted to the front side member portions of the front frame portion, the collision load can be dispersed to the three frames that are the front frame and the side frames and the inclined frames. As a result, deformation of the front frame portion due to collision load is suppressed, and the repairability improves.

In a vehicle frame structure of a second aspect, the vehicle frame structure of the first aspect further includes a connecting frame connecting rear ends of the pair of left and right inclined frames together in the vehicle transverse direction, wherein the inclined frames are connected to the front frame portion via the connecting frame.

In the vehicle frame structure of the second aspect, collision load can be transmitted effectively by the connecting frame toward the side opposite the collision. Further, because the inclined frames are connected to the front frame portion via the connecting frame, collision load can be transmitted from the front frame to the front frame portion via the front frame, the inclined frames and the connecting frame.

In a vehicle frame structure of a third aspect, in the second aspect, the connecting frame is fixed to the suspension tower portions.

In the vehicle frame structure of the third aspect, load inputted from the suspension tower portions can be dispersed via the connecting frame.

In a vehicle frame structure of a fourth aspect, the vehicle frame structure of the second aspect or the third aspect includes a pair of left and right rear frames respectively extending at inclines toward a vehicle rear side and vehicle transverse direction outer sides from vehicle transverse direction both end portions of the connecting frame, and connected to at least one of the side frames or the apron upper member portions.

In the vehicle frame structure of the fourth aspect, collision load can be transmitted effectively toward the vehicle rear side from the connecting frame via the rear frames.

In a vehicle frame structure of a fifth aspect, in the fourth aspect, the rear frames are connected to at least one of the side frames or the apron upper member portions, at further toward a vehicle rear side than the suspension tower portions.

In the vehicle frame structure of the fifth aspect, after collision load is transmitted from the connecting frame toward the side opposite the collision, the load can be dispersed at the front and the rear of the suspension tower portions by the inclined frames and the rear frames.

In a vehicle frame structure of a sixth aspect, in the first aspect, the front frame is structured to include a region fixed to an upper end portion of a radiator.

In the vehicle frame structure of the sixth aspect, due to some of the collision load being transmitted from the front frame to the radiator, the radiator can be made to bear some of the collision load.

In a vehicle frame structure of a seventh aspect, in the first aspect, each connection portion of the front frame and the side frames is set within a range of 25% of a vehicle width toward a vehicle transverse direction inner side from a transverse direction outermost portion of a vehicle.

In the vehicle frame structure of the seventh aspect, in small overlap crash tests, it is easy for the rounded portion of the barrier to hit the connection portion of the front frame and the side frame. As a result, the effect of dispersing the load at the time of a small overlap crash test improves.

As described above, in accordance with the vehicle frame structure relating to the present disclosure, collision load can be dispersed effectively.

### BRIEF DESCRIPTION OF THE DRAWINGS

An exemplary embodiment of the present disclosure will be described in detail based on the following figures, wherein:
Fig. 1 is a schematic plan view of a front frame portion structuring a vehicle frame structure relating to an embodiment;
Fig. 2 is a schematic plan view of the vehicle frame structure relating to the embodiment;
Fig. 3 is a schematic plan view of a vehicle frame structure relating to a first modified example;
Fig. 4 is a schematic plan view of a vehicle frame structure relating to a second modified example;
Fig. 5 is a schematic plan view of a vehicle frame structure relating to a third modified example; and
Fig. 6 is a schematic plan view of a vehicle frame structure relating to a fourth modified example.

### DETAILED DESCRIPTION

A vehicle frame structure relating to an embodiment is described with reference to the drawings. Note that arrow FR and arrow RH in the respective drawings indicate the vehicle forward direction and the vehicle rightward direction of a vehicle. In the following description, when longitudinal, vertical and left-right directions are used without being specified, they refer to the longitudinal of the vehicle longitudinal direction, the vertical of the vehicle vertical direction, and the left and right of the vehicle left-right direction (transverse direction), respectively.

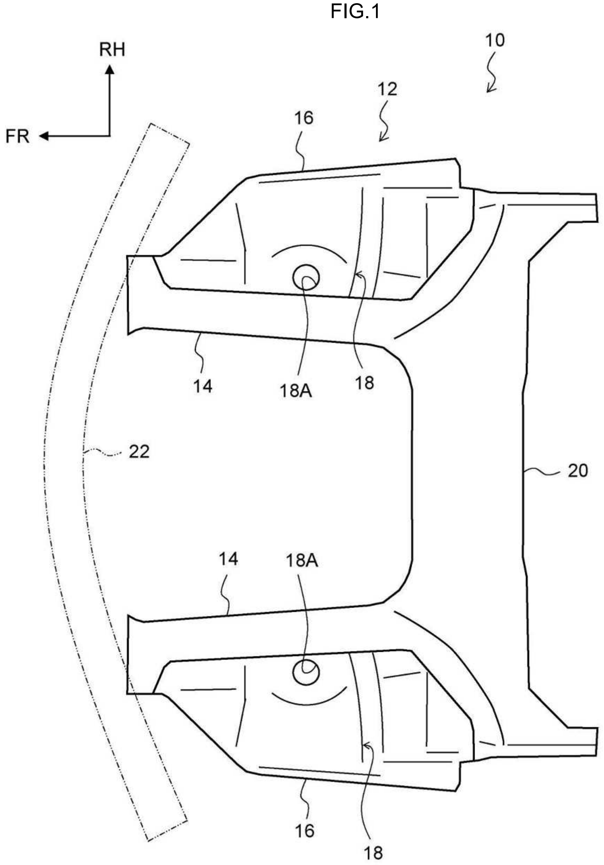

Fig. 1 is a schematic plan view of a front frame portion 12 structuring a vehicle frame structure relating to the embodiment. As illustrated in Fig. 1, the front frame portion 12 that is formed integrally by casting (die casting) is provided at the front portion of a vehicle 10 to which the vehicle frame structure of the present embodiment is applied. The front frame portion 12 is structured to include a pair of left and right front side member portions 14, a pair of left and right apron upper member portions 16, and a pair of left and right suspension tower portions 18.

Note that the vehicle 10 of the present embodiment is an electric vehicle such as a BEV (Battery Electric Vehicle) that uses a motor for the motive power thereof, but the present disclosure is not limited to this and may be applied to another type of vehicle. For example, the present disclosure may be applied to an FCEV (Fuel Cell Electric Vehicle), an HEV (Hybrid Electric Vehicle), or a PHEV (Plug-in Hybrid Electric Vehicle). Further, the present disclosure may be applied to an engine-powered vehicle that uses only an engine for the motive power thereof.

The front side member portions 14 are provided at the vehicle transverse direction both sides of the vehicle front portion, and respectively extend in the vehicle longitudinal direction. The rear end portions of the front side member portions 14 are connected together in the vehicle transverse direction by a dash portion 20. The dash portion 20 extends in the vehicle transverse direction and separates the passenger compartment interior and the passenger compartment exterior.

A bumper reinforcement 22 is mounted either directly or via crash boxes or the like to the front ends of the front side member portions 14.

The apron upper member portions 16 are provided at the vehicle upper sides and vehicle transverse direction outer sides of the front side member portions 14. The apron upper member portions 16 are provided as a left-right pair, and respectively extend in the vehicle longitudinal direction, and structure upper lateral frames of the vehicle 10. The front ends of the apron upper member portions 16 are connected to the front side member portions 14. The rear ends of the apron upper member portions 16 are positioned further toward the vehicle upper side than the front ends thereof and are connected to unillustrated front pillars.

The suspension tower portions 18 are provided between the front side member portions 14 and the apron upper member portions 16. The suspension tower portions 18 are provided as a left-right pair, and an unillustrated suspension is disposed beneath the suspension tower portions 18. Mounting holes 18A to which the suspension is mounted are formed in the upper ends of the suspension tower portions 18.

Note that the front frame portion 12 is not limited to the structure illustrated in Fig. 1. For example, a structure in which crash boxes are formed integrally with the front ends of the front side member portions 14 may be employed. Further, a structure in which portions of the front pillars are formed integrally with the vehicle transverse direction both end portions of the dash portion 20 may be employed. Moreover, the pair of left and right front side member portions 14 illustrated in Fig. 1 are inclined slightly with respect to the vehicle longitudinal direction as seen in a plan view such that the front portions thereof are positioned further toward the vehicle transverse direction outer sides than the rear portions thereof. However, the present disclosure is not limited to this, and the pair of left and right front side member portions may be disposed parallel to one another along the vehicle longitudinal direction.

Further, as an example, the front frame portion 12 of the present embodiment is formed of a metal whose main component is aluminum, but the present disclosure is not limited to this, and the front frame portion 12 may be formed of another metal.

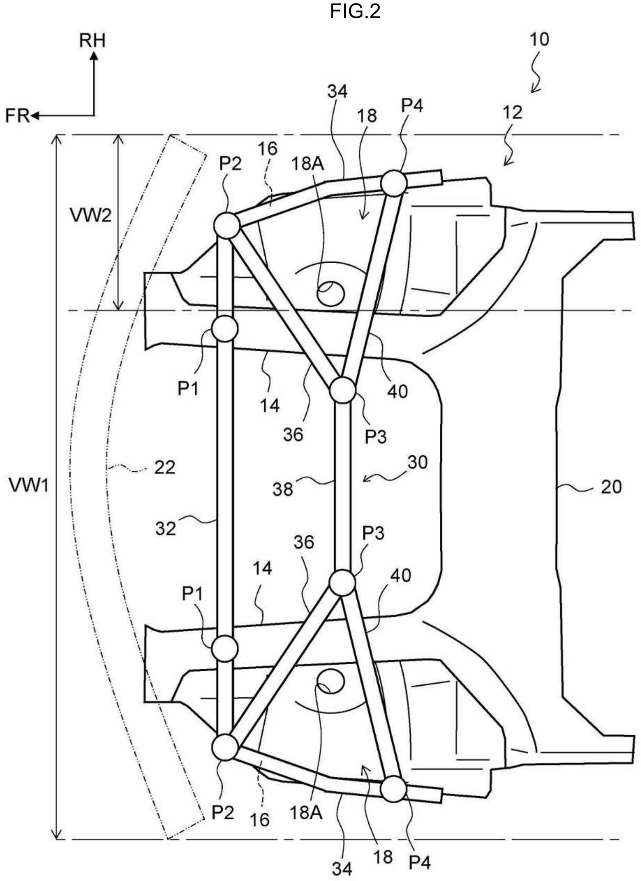

Fig. 2 is schematic plan view of the vehicle frame structure relating to the embodiment. As illustrated in Fig. 2, in the present embodiment, a reinforcing frame 30 is fixed to the upper portion of the front frame portion 12. The reinforcing frame 30 is structured to include a front frame 32, side frames 34, inclined frames 36, a connecting frame 38, and rear frames 40.

Note that, in the present embodiment, as an example, the respective frames that structure the reinforcing frame 30 are formed by metal members that are shaped as elongated plates, but the present disclosure is not limited to this. For example, at least some of the frames that structure the reinforcing frame 30 may be closed cross-sectional structures. Further, at least some of the frames structuring the reinforcing frame 30 may be formed by resin members, or may be formed by members that combine metal and resin.

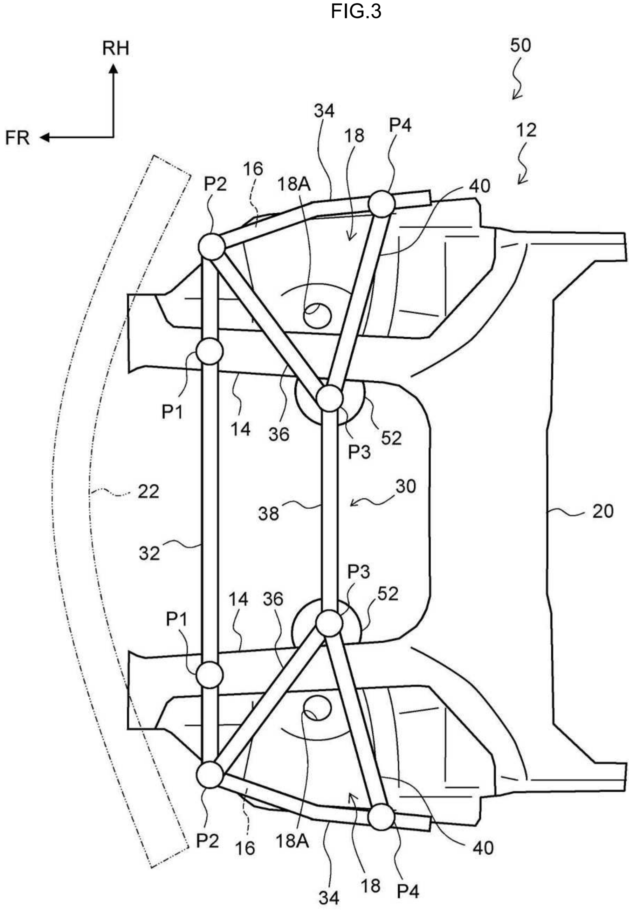

The front frame 32 is disposed above the front side member portions 14 and extends in the vehicle transverse direction. Further, the front frame 32 is disposed further toward the vehicle front side than the suspension tower portions 18, and is mounted to the front side member portions 14 at left and right connection portions P1. Note that connection portions P1, P2, P3 and P4 illustrated in Fig. 2 and Fig. 3 are depicted for convenience of the explanation, and may differ from the actual shapes thereof.

For example, at the connection portions P1, the front frame 32 is mechanically fastened to the front side member portions 14 by fasteners such as bolts. Specifically, at the right-side connection portion P1, the right-side front side member portion 14 and the front frame 32 are mechanically fastened. At the left-side connection portion P1, the left-side front side member portion 14 and the front frame 32 are mechanically fastened. In this way, the pair of front side member portions 14 are connected together in the vehicle transverse direction by the front frame 32.

The side frames 34 are provided as a left-right pair, and respectively extend toward the vehicle rear side from the vehicle transverse direction both end portions of the front frame 32, and are connected to the above-described apron upper member portions. Specifically, the side frames 34 are disposed above the apron upper member portions 16, and the front ends of the side frames 34 are joined to the vehicle transverse direction end portions of the front frame 32 at the connection portions P2.

In the present embodiment, as an example, the front frame 32 and the side frames 34 are mechanically fastened, but the present disclosure is not limited to this, and the front frame 32 and the side frames 34 may be joined by welding or the like, or the front frame 32 and the side frames 34 may be joined by another means.

As seen in a plan view, the side frames 34 are inclined such that the rear portions thereof are positioned further toward the vehicle transverse direction outer sides than the front portions thereof, and bent portions are provided between the front portions and the rear portions. The side frames 34 are fixed to the apron upper member portions 16 at at least one of the connection portions P2 that are at the front, the connection portions P4 that are at the rear, and another place. In the present embodiment, as an example, the side frames 34 and the apron upper member portions 16 are fastened mechanically at the connection portions P2 and the connection portions P4.

Here, the connection portions P2 between the front frame 32 and the side frames 34 are set to be further toward the vehicle transverse direction outer sides than the front side member portions 14. Therefore, in the present embodiment, the front frame 32 extends further toward the vehicle transverse direction outer sides than the front side member portions 14. Further, the inclined frames 36 extend from the connection portions P2 toward the vehicle rear side and the vehicle transverse direction inner sides.

The inclined frames 36 are provided as a left-right pair, and, as seen in a plan view, are inclined such that the rear portions thereof are positioned further toward the vehicle transverse direction inner sides than the front portions. Further, at the connection portions P2, the front ends of the inclined frames 36 are fastened, together with the front frame 32 and the side frames 34, to the apron upper member portions 16.

The rear ends of the inclined frames 36 are positioned further toward the vehicle transverse direction inner sides than the front side member portions 14, and are fastened to the connecting frame 38 at the connection portions P3.

The connecting frame 38 extends in the vehicle transverse direction, and connects, in the vehicle transverse direction, the rear ends of the pair of left and right inclined frames 36 together. Further, in the present embodiment, as an example, the connecting frame 38 is disposed substantially parallel to the front frame 32, and the length thereof in the vehicle transverse direction is shorter than that of the front frame 32. Therefore, a frame that is substantially trapezoidal as seen in a plan view is structured by the front frame 32, the inclined frames 36 and the connecting frame 38.

The rear frames 40 extend from the vehicle transverse direction both end portions of the connecting frame 38, at inclines toward the vehicle rear side and vehicle transverse direction outer sides. The rear frames 40 are provided as a left-right pair, and the respective vehicle transverse direction inner side end portions thereof are joined to the inclined frames 36 and the connecting frame 38 at the connection portions P3.

The rear frames 40 are inclined such that, as seen in a plan view, the rear portions thereof are positioned further toward the vehicle rear side than the front portions. The vehicle transverse direction outer side end portions of the rear frames 40 are connected to at least one of the side frames 34 or the apron upper member portions 16, at the connection portions P4 that are further toward the rear than the suspension tower portions 18. In the present embodiment, as an example, the rear frames 40 are joined to both the side frames 34 and the apron upper member portions 16 at the connection portions P4, but the present disclosure is not limited to this. For example, the end portions of the rear frames 40 may be connected to only the side frames 34, or may be connected to only the apron upper member portions 16.

Here, the connection portions P2 of the front frame 32 and the side frames 34 are set within a range of 25% of the width of the vehicle toward the vehicle transverse direction inner sides from the transverse direction outermost portions of the vehicle 10. In Fig. 2, VW1 indicates the width between the left and right transverse direction outermost portions. VW2 indicates a length that is 25% of VW1 toward the vehicle transverse direction inner side from a transverse direction outermost portion of the vehicle 10. The connection portion P2 is set within the range of VW2.

### (Operation)

Operation of the vehicle frame structure relating to the present embodiment is described next.

In the vehicle frame structure relating to the present embodiment, as illustrated in Fig. 1, the front frame portion 12 is formed integrally by casting so as to include the front side member portions 14, the apron upper member portions 16, and the suspension tower portions 18. The front side member portions 14 are provided as a left-right pair, and extend in the vehicle longitudinal direction at the vehicle front portion. The apron upper member portions 16 are provided as a left-right pair, and are disposed at the vehicle upper sides and the vehicle transverse direction outer sides of the front side member portions 14. The suspension tower portions 18 are provided as a left-right pair, and are disposed between the front side member portions 14 and the apron upper member portions 16, respectively. Due to the front frame portion 12 being formed integrally by casting in this way, the number of parts can be reduced. Namely, if the frame of the vehicle front portion is formed by steel plates or the like, there is the need for plural parts, and manpower for joining the respective parts by spot welding or the like is incurred. In contrast, due to the front frame portion 12 being formed integrally by casting such as in the present embodiment, the number of parts and the manpower involved in manufacturing can be reduced.

Further, in the present embodiment, as illustrated in Fig. 2, the front frame 32 is fixed to the upper portion of the front frame portion 12, and the front frame 32 connects the pair of front side member portions 14 in the vehicle transverse direction at further toward the vehicle front side than the suspension tower portions 18. Moreover, the pair of left and right side frames 34 extend toward the vehicle rear side from the vehicle transverse direction both end portions of the front frame 32, respectively, and the side frames 34 are connected to the apron upper member portions 16, respectively. The pair of left and right inclined frames 36 extend toward the vehicle rear side and the vehicle transverse direction inner sides from the connection portions P2 at which the front frame 32 and the side frames 34 are connected at further toward the vehicle transverse direction outer sides than the front side member portions 14. Due thereto, when collision load is inputted to the front side member portions 14 of the front frame portion 12, the collision load can be dispersed to the three frames that are the front frame 32 and the side frames 34 and the inclined frames 36. As a result, the collision load can be dispersed effectively.

Moreover, in the present embodiment, due to the pair of left and right inclined frames 36 being connected in the vehicle transverse direction by the connecting frame 38, collision load can be transmitted effectively toward the side opposite the collision by the connecting frame 38.

Still further, in the present embodiment, due to the rear frames 40, which extend toward the vehicle rear side from the connecting frame 38, being provided, collision load can be effectively transmitted from the connecting frame 38 toward the vehicle rear side via the rear frames 40.

In the present embodiment, the connection portions P2 of the side frames 34 and the inclined frames 36 are further toward the front than the suspension tower portions 18, and the connection portions P4 of the side frames 34 and the rear frames 40 are further toward the rear than the suspension tower portions 18. Therefore, after collision load is transmitted from the connecting frame 38 toward the side opposite the collision, the load can be dispersed at the front and the rear of the suspension tower portions 18 by the inclined frames 36 and the rear frames 40.

Further, in the present embodiment, the connection portions P2 of the front frame 32 and the side frames 34 are set within the range of VW2, which is a length that is 25% of VW1, from the transverse direction outermost portions toward the vehicle transverse direction inner sides. Due thereto, in small overlap crash tests, it is easy for the rounded portion of the barrier to hit the connection portion of the front frame 32 and the side frame 34, and the effect of dispersing the load at the time of a small overlap crash test can be improved. In other words, even in a collision of a form in which excessive collision load is inputted to the front side member portion 14 that is at one side such as in a small overlap crash, the collision load can be dispersed effectively in three directions, and the collision resistance can be improved.

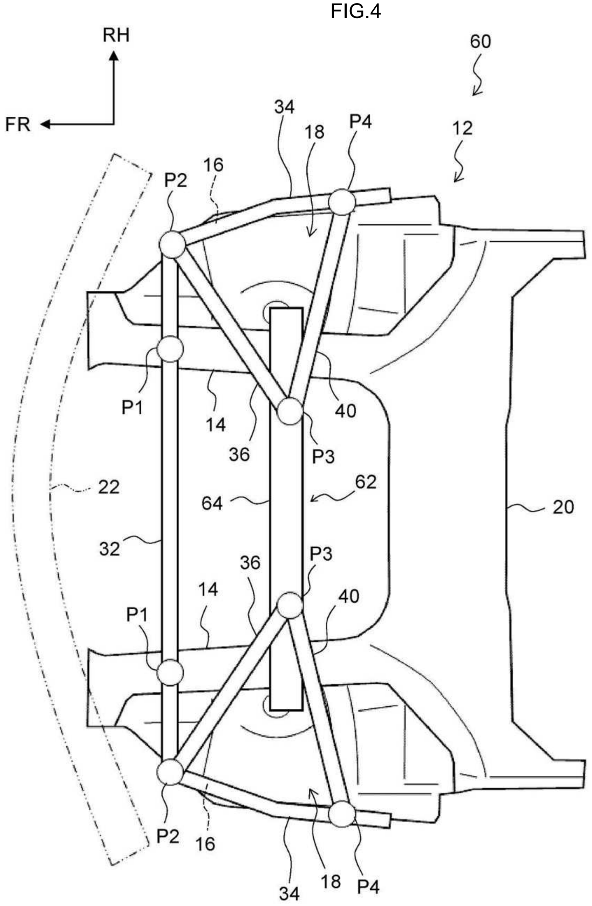

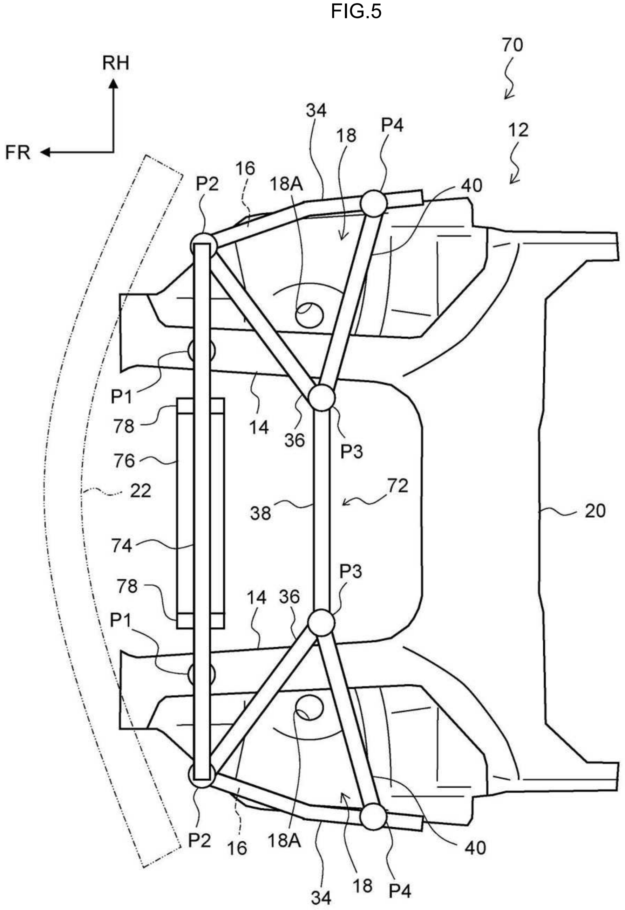

Note that, in the present embodiment, the connecting frame 38 is not fixed to the front frame portion 12, but the present disclosure is not limited to this. For example, the structure of a first modified example illustrated in Fig. 3 may be employed, or the structure of a second modified example illustrated in Fig. 4 may be employed. Further, as in a third modified example that is illustrated in Fig. 5, the front frame 32 may be fixed to a radiator. These respective modified examples are described hereinafter.

### (First Modified Example)

Fig. 3 is a schematic plan view of a vehicle frame structure relating to a first modified example. As illustrated in Fig. 3, vehicle 50, to which a vehicle frame structure relating to the present modified example is applied, differs from the embodiment with respect to the point that both end portions of the connecting frame 38 are fastened to the front frame portion 12.

The front frame portion 12 has a pair of left and right mounting seats 52. The mounting seats 52 respectively project out toward the vehicle transverse direction inner sides from the root portions of the front side member portions 14, and, as seen in a plan view, are substantially semicircular. Note that the shape of the mounting seats 52 is not particularly limited, and the mounting seats may be substantially rectangular or substantially triangular.

At the connection portions P3, both end portions of the connecting frame 38 are mechanically fastened to the mounting seats 52 by fasteners such as bolts. In the present modified example, as an example, the connecting frame 38, the inclined frames 36 and the rear frames 40 are all fastened to the mounting seats 52 at the connection portions P3. In other words, the inclined frames 36 and the rear frames 40 are connected to the front frame portion 12 via the connecting frame 38.

In accordance with the present modified example, due to both end portions of the connecting frame 38 being fixed to the front frame portion 12, deformation of the reinforcing frame 30 can be suppressed, and the collision resistance can be improved. Further, because the connecting frame 38, the inclined frames 36 and the rear frames 40 are all fastened to the mounting seats 52 at the connection portions P3, these frames can be fixed securely with a smaller number of parts.

### (Second Modified Example)

Fig. 4 is a schematic plan view of a vehicle frame structure relating to a second modified example. As illustrated in Fig. 4, in vehicle 60 to which a vehicle frame structure relating to the present modified example is applied, a connecting frame 64 is provided instead of the connecting frame 38 of the embodiment.

The vehicle 60 to which the vehicle frame structure of the present modified example is applied has a reinforcing frame 62. The reinforcing frame 62 is structured to include the front frame 32, the side frames 34, the inclined frames 36, the connecting frame 64 and the rear frames 40.

The connecting frame 64 is formed by an elongated, plate-shaped member, and is disposed at the vehicle rear side of the front frame 32, and extends in the vehicle transverse direction. The length of the connecting frame 64 is shorter than that of the front frame 32. Note that, as an example, the vehicle transverse direction length of the connecting frame 64 of the present modified example is longer than, and the width thereof is wider than, those of the connecting frame 38 of the embodiment, but the present disclosure is not limited to this. Further, the connecting frame 64 may be formed by a member having a closed cross-sectional shape.

Both end portions of the connecting frame 64 respectively extend to further toward the vehicle transverse direction outer sides than the connection portions P3, and are mechanically fastened to the suspension tower portions 18 by fasteners such as bolts. Therefore, the inclined frames 36 and the rear frames 40 are connected to the front frame portion 12 via the connecting frame 64.

In accordance with the present modified example, because the inclined frames 36 are connected to the front frame portion 12 via the connecting frame 64, collision load can be transmitted from the front frame 32 to the front frame portion 12 via the front frame 32, the inclined frames 36 and the connecting frame 64.

Further, in the present modified example, because both end portions of the connecting frame 64 are fixed to the suspension tower portions 18, load inputted from the suspension tower portions 18 can be dispersed via the connecting frame 64.

### (Third Modified Example)

Fig. 5 is a schematic plan view of a vehicle frame structure relating to a third modified example. As illustrated in Fig. 5, vehicle 70 to which a vehicle frame structure relating to the present modified example is applied differs from the embodiment with respect to the point that a front frame 74 is fixed to a radiator 76.

A reinforcing frame 72 that structures the vehicle frame structure of the present modified example is structured to include the front frame 74, the side frames 34, the inclined frames 36, the connecting frame 38 and the rear frames 40. The front frame 74 extends in the vehicle transverse direction and connects the left and right front side member portions 14 together in the vehicle transverse direction.

Here, the radiator 76 is disposed between the left and right front side member portions 14. The radiator 76 has, at the interior thereof, a flow path through which coolant flows, and is a heat exchanger that carries out heat exchange between traveling wind and the coolant.

Here, the vehicle transverse direction central portion of the front frame 74 is fixed to the upper end portion of the radiator 76. Namely, the front frame 74 of the present modified example also has the function of a radiator support for fixing the radiator 76.

Radiator side supports 78 are disposed at the vehicle transverse direction both sides of the radiator 76. The radiator side supports 78 fix the vehicle transverse direction both end portions of the radiator 76, and respectively extend in the vehicle vertical direction. The upper ends of the radiator side supports 78 are fixed to the front frame 74. In this way, the front frame 74 of the present modified example functions as a radiator upper support that structures the upper portion of the radiator support.

In accordance with the present modified example, it suffices to not provide a radiator upper support that is used exclusively for that purpose, and the number of parts can be reduced. Further, due to some of the collision load being transmitted from the front frame 74 to the radiator 76, the radiator can be made to bear some of the collision load.

Although a vehicle frame structure relating to the present disclosure has been described above, the present disclosure can, of course be implemented in various forms within a scope that does not depart from the gist thereof. For example, although the front ends of the apron upper member portions 16 are connected to the front side member portions 14 in the above-described embodiment, the present disclosure is not limited to this. The front side member portions 14 and the apron upper member portions 16 may be connected via the front frame 32 of the reinforcing frame 30.

Further, in the above-described embodiment, the front frame 32, the side frames 34, the inclined frames 36, the connecting frame 38 and the rear frames 40 that structure the reinforcing frame 30 are formed so have substantially the same widths, but the present disclosure is not limited to this. For example, some of the frames may be formed to be wider in accordance with the required load resistance.

Moreover, although the reinforcing frame 30 is structured to include the connecting frame 38 in the above-described embodiment, the present disclosure is not limited to this and may be a structure in which the connecting frame 38 is not provided. In this case, the two parts that are the inclined frame 36 and the rear frame 40 are joined at the connection portion P3. Further, the present disclosure may be a structure that does not have the connecting frame 38 and the rear frames 40. In this case, the rear ends of the inclined frames 36 are fastened to the front frame portion 12 via the mounting seats 52 described in the first modified example, or the like. Note that the mounting seats are not limited to structures provided at the front side member portions, and may be provided at the suspension tower portions 18 for example. In such a structure as well, collision load inputted to the connection portions P2 can be dispersed in the three directions of the front frame 32, the side frames 34 and the inclined frames 36.

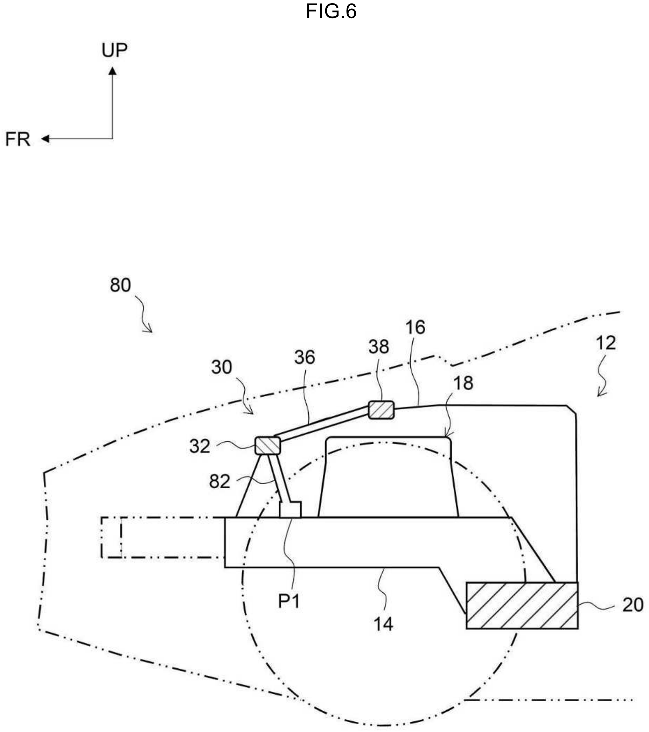

Further, as illustrated in Fig. 6, the front frame 32 may be connected to the front side member portions 14 at the connection portions P1 via brackets 82 that are separate bodies. Specifically, in a vehicle 80 relating to a fourth modified example that is illustrated in Fig. 6, the front frame 32 is positioned further toward the vehicle upper side than the front side member portions 14. The front side member portions 14 and the front frame 32 are connected by the brackets 82, and the brackets 82 are connected to the front side member portions 14 at the connection portions P1.

The following notes are disclosed in relation to the above-described embodiment.
(Note 1)
   A vehicle frame structure having:
   a front frame portion formed integrally by casting so as to include a pair of left and right front side member portions extending in a vehicle longitudinal direction at a vehicle front portion, a pair of left and right apron upper member portions disposed at a vehicle upper side and vehicle transverse direction outer sides of the front side member portions, and a pair of left and right suspension tower portions disposed between the front side member portions and the apron upper member portions;
   a front frame fixed to an upper portion of the front frame portion, and connecting the pair of front side member portions together in a vehicle transverse direction at further toward a vehicle front side than the suspension tower portions;
   a pair of left and right side frames respectively extending toward a vehicle rear side from vehicle transverse direction both end portions of the front frame and connected to the apron upper member portions; and
   a pair of left and right inclined frames extending at inclines toward a vehicle rear side and vehicle transverse direction inner sides from connection portions at which the front frame and the side frames are connected at further toward vehicle transverse direction outer sides than the front side member portions.
(Note 2)
   The vehicle frame structure of Note 1, further having a connecting frame connecting rear ends of the pair of left and right inclined frames together in the vehicle transverse direction,
   wherein the inclined frames are connected to the front frame portion via the connecting frame.
(Note 3)
   The vehicle frame structure of Note 2, wherein the connecting frame is fixed to the suspension tower portions.
(Note 4)
   The vehicle frame structure of Note 2 or 3, having a pair of left and right rear frames respectively extending at inclines toward a vehicle rear side and vehicle transverse direction outer sides from vehicle transverse direction both end portions of the connecting frame, and connected to at least one of the side frames and the apron upper member portions.
(Note 5)
   The vehicle frame structure of Note 4, wherein the rear frames are connected to at least one of the side frames and the apron upper member portions, at further toward a vehicle rear side than the suspension tower portions.
(Note 6)
   The vehicle frame structure of any one of Notes 1 through 5, wherein the front frame is structured to include a region fixed to an upper end portion of a radiator.
(Note 7)
   The vehicle frame structure of any one of Notes 1 through 6, wherein the connection portion of the front frame and the side frame is set within a range of 25% of a vehicle width toward a vehicle transverse direction inner side from a transverse direction outermost portion of a vehicle.

## Claims

1. A vehicle frame structure comprising:
a front frame portion (12) formed integrally by casting so as to include a pair of left and right front side member portions (14) extending in a vehicle longitudinal direction at a vehicle front portion, a pair of left and right apron upper member portions (16) disposed at a vehicle upper side and vehicle transverse direction outer sides of the front side member portions (14), and a pair of left and right suspension tower portions (18) disposed between the front side member portions (14) and the apron upper member portions (16);
a front frame (32) fixed to an upper portion of the front frame portion (12), and connecting the pair of front side member portions (14) together in a vehicle transverse direction at further toward a vehicle front side than the suspension tower portions (18);
a pair of left and right side frames (34) respectively extending toward a vehicle rear side from vehicle transverse direction both end portions of the front frame (32) and connected to the apron upper member portions (16); and
a pair of left and right inclined frames (36) extending at inclines toward a vehicle rear side and vehicle transverse direction inner sides from connection portions (P2) at which the front frame (32) and the side frames (34) are connected at further toward vehicle transverse direction outer sides than the front side member portions (14).

2. The vehicle frame structure according to claim 1, further comprising a connecting frame (38) connecting rear ends of the pair of left and right inclined frames (36) together in the vehicle transverse direction,
wherein the inclined frames (36) are connected to the front frame portion (12) via the connecting frame (38).

3. The vehicle frame structure according to claim 2, wherein the connecting frame (38) is fixed to the suspension tower portions (18).

4. The vehicle frame structure according to claim 2 or 3, comprising a pair of left and right rear frames (40) respectively extending at inclines toward a vehicle rear side and vehicle transverse direction outer sides from vehicle transverse direction both end portions of the connecting frame (38), and connected to at least one of the side frames (34) or the apron upper member portions (16).

5. The vehicle frame structure according to claim 4, wherein the rear frames (40) are connected to at least one of the side frames (34) or the apron upper member portions (16), at further toward a vehicle rear side than the suspension tower portions (18).

6. The vehicle frame structure according to any one of claims 1 to 5, wherein the front frame (32) is structured to include a region fixed to an upper end portion of a radiator (76).

7. The vehicle frame structure according to any one of claims 1 to 6, wherein each connection portion of the front frame (32) and the side frames (34) is set within a range of 25% of a vehicle width toward a vehicle transverse direction inner side from a transverse direction outermost portion of a vehicle.
